(19) **Europäisches Patentamt**

**European Patent Office**

**Office européen des brevets**

(11) Veröffentlichungsnummer: **0 340 402 B1**

(12) **EUROPÄISCHE PATENTSCHRIFT**

(45) Veröffentlichungstag der Patentschrift: **02.12.92**

(21) Anmeldenummer: **89103313.6**

(22) Anmeldetag: **24.02.89**

(51) Int. Cl.⁵: **B60P 1/16**, //C21B3/10

(54) **Transportfahrzeug mit Hubvorrichtung mit zwei synchron schwenkbaren Tragarmen.**

(30) Priorität: **07.04.88 DE 3811666**

(43) Veröffentlichungstag der Anmeldung:
**08.11.89 Patentblatt 89/45**

(45) Bekanntmachung des Hinweises auf die
Patenterteilung:
**02.12.92 Patentblatt 92/49**

(84) Benannte Vertragsstaaten:
**AT DE ES FR IT NL SE**

(56) Entgegenhaltungen:
**DE-A- 3 336 713**
**FR-A- 2 214 053**
**US-A- 3 200 975**
**US-A- 3 378 155**
**US-A- 3 446 378**

(73) Patentinhaber: **MAN Gutehoffnungshütte Aktiengesellschaft**
**Bahnhofstrasse 66 Postfach 11 02 40**
**W-4200 Oberhausen 11(DE)**

(72) Erfinder: **Kretschmann, Ernest**
**Aldekamp 2**
**W-4200 Oberhausen(DE)**
Erfinder: **Dettmer, Claus, Dipl.-Ing.**
**Parkstrasse 7**
**W-4200 Oberhausen 11(DE)**
Erfinder: **Franken, Wilhelm, Dipl.-Ing.**
**Feldwickerweg 43**
**W-4230 Wesel(DE)**

## Beschreibung

Die Erfindung betrifft ein Transportfahrzeug nach dem Oberbegriff des Anspruchs 1. Ein derartiges Transportfahrzeug ist aus der US-A-3 446 378 bekannt.

Transportfahrzeuge nach dem Oberbegriff des Anspruchs 1 finden bevorzugt Anwendung als Schlackentransport-Fahrzeuge in Hüttenwerken, wobei die Tragarme an ihren Enden hakenförmige Lager für die Trag- und Kippzapfen eines Schlackentransportgefäßes aufweisen. Fahrzeuge dieser Gattung können auch als Transportfahrzeuge z.B. im gewöhnlichen Straßenverkehr für den Transport von Containern für Baustellenschutt, Müll oder dgl. eingesetzt werden.

Bei deratigen Transportfahrzeugen besteht die Gefahr, daß es durch Störungen in der Ölversorgung der hydraulischen Gleichlaufsteuerung, z.B. verursacht durch mechanische Beschädigung des Systems, zu Fehlwinkelstellung der Tragarme kommt. Außerdem kann es durch einseitige Verteilung der an den Tragarmen hängenden Last zu Fehlsteuerungen kommen.

Aufgabe der Erfindung ist es, bei einem Transportfahrzeug mit Hubvorrichtung der angegebenen Art die Funktion der hydraulischen Gleichlaufsteuerung für die Tragarme zu überwachen, um dadurch Schäden, die durch die genannten Fehler auftreten können, zu verhindern.

Die Lösung der Aufgabe ist im Anspruch 1 angegeben. Die Unteransprüche beziehen sich auf vorteilhafte Ausgestaltungen der Erfindung.

Die erfindungsgemäße Positionsüberwachung der Tragarme bietet eine optimale Sicherheit beim Betrieb der hydraulischen Gleichlaufsteuerung der schwenkbaren Tragarme des Transportfahrzeuges.

Eine Ausführungsform der Erfindung wird anhand der Zeichnungen näher erläutert. Es zeigt:

Fig.1   eine perspektivische und schematisch vereinfachte Darstellung eines Transportfahrzeuges gemäß der Erfindung;

Fig.2   ein Blockschaltbild der Auswerteschaltung der Gleichlaufüberwachungseinrichtung.

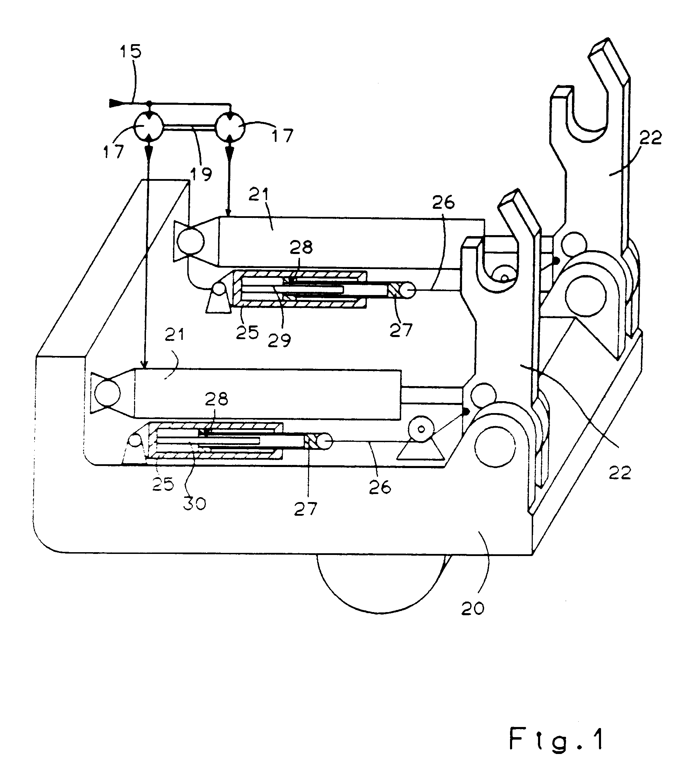

Fig. 1 zeigt schematisch ein Transportfahrzeug 20, welches z.B. zum Aufsatteln auf ein Zugfahrzeug ausgebildet sein kann. Selbstverständlich ist die Erfindung auch bei selbstfahrenden Transportfahrzeugen anwendbar. Am hinteren Ende des Zugfahrzeugs 20 sind zwei parallele Tragarme 22 in vertikalen Ebenen schwenkbar gelagert. An den Enden der Tragarme 22 sind gabelförmige Lager zur Aufnahme z.B. der Kippzapfen eines Schlackenkübels ausgebildet. Die Tragarme 22 haben keine mechanische Verbindung miteinander, so daß sie im Prinzip unabhängig voneinander geschwenkt werden können.

An jedem Tragarm 22 greift die Kolbenstange eines hydraulischen Hubzylinders 21 an, um den Tragarm beim Hubvorgang nach oben bzw. beim Absetzvorgang nach unten zu schwenken. Schematisch und stark vereinfacht ist in Fig. 1 die Zufuhr für Hydraulikmedium zur Kolbenseite jedes Hubzylinders 21 dargestellt. Aus einer gemeinsamen Versorgungsleitung 15, die von der (nicht dargestellten) Hauptdruckpumpe des hydraulischen Hubsystems beaufschlagt wird, gelangt das Hydraulikmedium zu den beiden Hubzylindern 21 über je einen Hydromotor 17. Die beiden Hydromotoren sind durch eine Welle 19 mechanisch gekoppelt. Die gekoppelten Hydromotoren 17, die volumetrische Dosierorgane darstellen, bewirken, daß den Hubzylindern immer exakt gleiche Mengen von Hydraulikmedium zugeführt werden. In gleicher Weise ist die (nicht dargestellte) Zufuhr von Hydraulikmedium zu den stangenseitigen Arbeitsräumen der Hubzylinder 21 ausgebildet. Auf diese Weise wird bei jeder Hub- bzw. Absetzbewegung ein völliger Gleichlauf der beiden Hubzylinder 21 und damit auch der beiden Tragarme 22 gewährleistet. Der hydraulische Gleichlauf kann auch durch andere Mittel erzielt werden, wie z.B. durch einen einteiligen Rotationsstromteiler oder Kolbenteiler, wobei dann aber ggf. größere Gleichlauffehler auftreten.

Bei einer Beschädigung bzw. einem Bruch der hydraulischen Rohr- oder Schlauchleitungen, oder anderen Störursachen, kann allerdings der Gleichlauf der Hubzylinder 21 gestört werden. Hierdurch könnte sich eine ungleiche Stellung der Tragarme 22 ergeben, was eine Gefahrenquelle darstellen kann, insb. wenn die zu hebende Last aus flüssiger Schlacke od.dgl. besteht.

Für solche Störfälle ist erfindungsgemäß eine zusätzliche Gleichlaufüberwachung vorgesehen. Jeder Tragarm 22 ist über ein Seil 26 mit der Kolbenstange 27 verbunden. In jedem Meßzylinder 25 wird auf der Stangenseite des Kolbens ständig ein vorgegebener hydraulischer Druck aufrechterhalten, der das Seil 26 unter Spannung hält. Mit jeder Kolbenstange 27 ist der Schleifkontakt 28 je eines Potentiometers 29 bzw. 30 verbunden, das z.B. geschützt im Meßzylinder untergebracht sein kann. Da jeder Schleifkontakt 28 über die Kolbenstange 27 und das Seil 26 den Bewegungen des zugehörigen Tragarms 22 nachgeführt wird, stellt das Potentiometer 29 bzw. 30 einen elektrischen Positionssensor für den Zugehörigen Tragarm 22 dar.

Selbstverständlich kann die Verbindung des Schleifkontaktes 28 mit dem Seil 26 bzw. der Kolbenstange 27 auch an anderer Stelle erfolgen. Auch können die Potentiometer 29, 30 durch andere, z.B. elektronische oder optische Positionsgeber ersetzt werden.

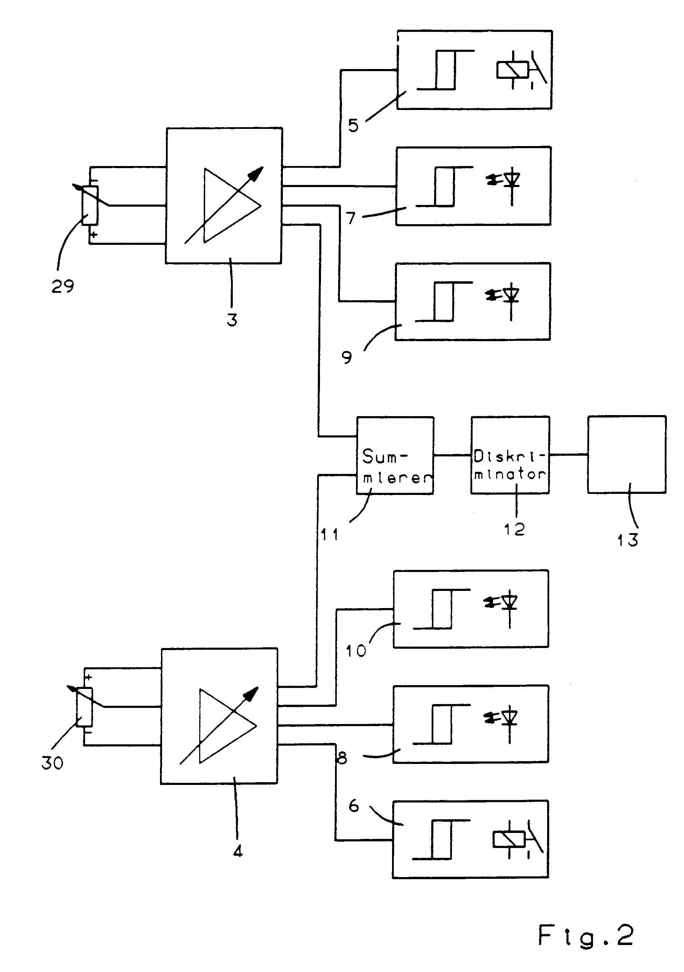

Die Potentiometer 29, 30 sind in der aus Fig. 2 ersichtlichen Weise mit einer Auswerteschaltung verbunden. Wie angedeutet ist das Potentiometer 29 des rechten Tragarms 22 gegensinnig zum Potentiometer 30 des linken Tragarms mit Spannung beaufschlagt. Die an jedem Potentiometer abgegriffene Spannung wird in einem Eingangsverstärker 3 bzw. 4 verstärkt. Bewegt sich jeder Hubarm von Anschlag zu Anschlag, so ändert sich die Ausgangsspannung des einen Eingangsverstärkers von einem unteren Grenzwert U1 zu einem oberen Grenzwert U2, während sich gleichzeitig die Ausgangsspannung des anderen Eingangsverstärkers vom oberen Grenzwert U2 zum unteren Grenzwert U1 ändert. Die beiden Ausgangsspannungen werden einem Summierglied 11 zugeführt. Bei Gleichlauf der beiden Tragarme 22 ist die Summe der beiden Ausgangsspannungen unabhängig von der Stellung der Tragarme konstant. Nur wenn ein Tragarm dem anderen voreilt, ändert sich die Summe. Übersteigt die Spannungsänderung, und damit die Gleichlaufdifferenz der Tragarme 22, einen vorgegebenen Wert, so wird dies in einem Diskriminator 12 mit vorzugsweise einstellbarer Ansprechschwelle erfaßt, der ein Signal an eine Schalteinrichtung 13 abgibt. Diese kann z.B. die weitere Ansteuerung der Hubzylinder 21 blockieren, so daß die Tragarme 22 in der jeweiligen Stellung blockiert bleiben. Gleichzeitig kann ein Alarmsignal ausgelöst werden.

Die von einem der Eingangsverstärker, z.B. dem Verstärker 3, erzeugte Ausgangsspannung, die proportional zur jeweiligen Hubstellung der Tragarme 22 ist, kann außerdem einem Schmitt-Trigger 5 zugeführt werden, der bei bestimmten Werten der Ausgangsspannung, d.h. bei bestimmten Hubstellungen der Tragarme 22, ein Relais betätigt, welches z.B. dazu dient, hydraulische Verriegelungseinrichtungen, die die ergriffene Last an den Tragarmen 22 verriegeln, freizugeben. Hierdurch wird gewährleistet, daß eine Freigabe der Last nur in der jeweils untersten Hubstellung der Tragarme 22 möglich ist.

Die Ausgangsspannung des anderen Eingangsverstärkers 4 (oder auch des Eingangsverstärkers 3) kann ferner einem weiteren Schmitt-Trigger 6 zugeführt werden, der ebenfalls bei bestimmten Werten der Ausgangsspannung, und damit bei bestimmten Hubstellungen der Tragarme 22, ein Relais betätigt, welches die Freigabe von (nicht dargestellten) Kippeinrichtungen zum Kippen eines angehobenen Transportgefäßes bewirkt. Hierdurch wird gewährleistet, daß das Kippen des Transportgefäßes nur in einer hierfür vorgesehenen bestimmten Hubstellung der Tragarme 22 möglich ist.

Die Eingangsverstärker 3, 4 sind vorzugsweise einstellbar, wodurch eine Anpassung an Fertigungstoleranzen der Meßzylinder 25 bzw. an Einstellabweichungen der Seilverbindungen 26 möglich ist. Zur Erleichterung der Einstellung kann die Ausgangsspannung der Eingangsverstärker 3, 4 weiteren Schmitt-Trigger 6, 8 bzw. 7, 9 zugeführt werden, welche bei Erreichen der unteren bzw. oberen Grenzspannung U1 bzw. U2 jeweils zugeordnete Leuchtdioden ansteuern. Durch diese Leuchtanzeige bei Erreichen der Spannung U1 bzw. U2 ist eine Einstellung der Eingangsverstärker 3, 4 ohne Zuhilfenahme eines Meßgerätes möglich.

Die Gleichlaufüberwachungseinrichtung bietet Sicherheit gegen jegliches Schieflaufen der gehobenen Last, insb. im Falle eines Schlackenkübels od.dgl., sowie Schutz vor Beschädigungen des mechanischen Aufbaus. Im Schwenkbereich der Hubarme, und damit in dem durch überlaufende Schlacke od.dgl. gefährdeten Bereich, sind keine elektrischen Schalter od.dgl. erforderlich. Auch brauchen keine elektrischen Leitungen zu den Tragarmen geführt zu werden. Die gesamte Auswerteschaltung kann z.B. innerhalb der Fahrerkabine des Transportfahrzeuges angeordnet werden, so daß auch die Einstellung der Sollwerte im Schutz dieser Kabine vorgenommen werden kann. Die von den Potentiometern 29, 30 oder entsprechenden Positionsgebern zur Verfügung gestellten Positionssignale können auch für weitere Zwecke verwendet werden, wenn kompliziertere Be- und Entladebedingungen in Abhängigkeit von der Tragarmposition gesteuert werden sollen.

## Patentansprüche

1. Transportfahrzeug mit Hubvorrichtung, die mindestens zwei synchron miteinander auf- und abschwenkbare Tragarme und einen hydraulischen Hubantrieb mit Hubzylindern zum Schwenken der Tragarme aufweist, wobei die Tragarme mechanisch nicht gekoppelt sind und die Hubzylinder durch eine hydraulische Gleichlaufsteuerung miteinander verbunden sind,
dadurch gekennzeichnet,
daß zusätzlich zu der hydraulischen Gleichlaufsteuerung (17, 19) eine Gleichlaufüberwachung der Tragarme (22) vorgesehen ist, die mit den Tragarmen (22) gekoppelte Positionsgeber (29, 30) und eine an diese angeschlossene, auf Positionsdifferenzen der Tragarme (22) ansprechende Auswerteschaltung (3, 4, 11, 12) aufweist.

2. Transportfahrzeug nach Anspruch 1,
dadurch gekennzeichnet,
daß jeder Tragarm (22) mechanisch mit dem beweglichen Kontakt (28) eines als Positionsgeber dienenden Potentiometers (29, 30) verbunden ist.

3. Transportfahrzeug nach Anspruch 1, daurch gekennzeichnet, daß mittels der Auswerteschaltung die Blockierung des hydraulischen Hubantriebes und/oder die Auslösung eines Alarmsignals steuerbar ist.

4. Transportfahrzeug nach Anspruch 2, daurch gekennzeichnet, daß die mechanische Kopplung jedes Tragarms (22) mit dem zugehörigen Potentiometer (29, 30) aus einem Seilzug (26) besteht, der durch eine Spannvorrichtung (25) unter Spannung gehalten wird.

5. Transportfahrzeug nach Anspruch 4, dadurch gekennzeichnet, daß die Spannvorrichtung als mit einem vorgegebenen Druck beaufschlagter Druckmittelzylinder (25) ausgebildet ist.

6. Transportfahrzeug nach Anspruch 1, dadurch gekennzeichnet, daß die Auswerteschaltung zusätzlich auf die Position der Tragarme (22) ansprechende Schaltungsteile (5, 6) aufweist, durch die bei Erreichen bestimmter Tragarmpositionen zusätzliche Einrichtungen, wie Lastverriegelung und/oder Kippantrieb, freigebbar bzw. steuerbar sind.

## Claims

1. Transporter with lifting device comprising at least two supporting arms which are pivotable up and down in synchronisation with each other and a hydraulic lifting drive with lifting cylinders for pivoting the supporting arms, wherein the supporting arms are not coupled mechanically and the lifting cylinders are connected to each other by a hydraulic synchronisation control means, characterised in that in addition to the hydraulic synchronisation control means (17, 19), there is provided a synchronisation monitor for the supporting arms (22), which comprises position transmitters (29, 30) coupled to the supporting arms (22) and an analyser circuit (3, 4, 11, 12) connected to the position transmitters and responding to differences in position of the supporting arms (22).

2. Transporter according to claim 1, characterised in that each supporting arm (22) is mechanically connected to the movable contact (28) of a potentiometer (29, 30) serving as a position transmitter.

3. Transporter according to claim 1, characterised in that locking of the hydraulic lifting drive and/or triggering of an alarm signal can be controlled by means of the analyser circuit.

4. Transporter according to claim 2, characterised in that the mechanical coupling of each supporting arm (22) to the associated potentiometer (29, 30) consists of a control cable (26) which is kept under tension by a tensioning device (25).

5. Transporter according to claim 4, characterised in that the tensioning device is constructed as a fluid cylinder (25) subjected to a predetermined pressure.

6. Transporter according to claim 1, characterised in that the analyser circuit comprises in addition circuit components (5, 6) which respond to the position of the supporting arms (22) and by which, on reaching certain positions of the supporting arms, additional devices such as load locking and/or tilting drive means can be released or actuated.

## Revendications

1. Véhicule de transport avec un dispositif de levage qui comporte au moins deux bras porteurs susceptibles de pivoter vers le haut et vers le bas en synchronisme et une commande de levage hydraulique avec des vérins de levage pour faire pivoter les bras porteurs, tandis que ces bras porteurs ne sont pas couplés mécaniquement et que les vérins de levage sont reliés ensemble par une commande hydraulique de synchronisation, véhicule de transport caractérisé en ce que, en supplément à la commande hydraulique de synchronisation (17, 19) il est prévu une surveillance de la synchronisation des bras porteurs (22), qui comportent des indicateurs de positions (29, 30) couplés aux bras porteurs (22) et un circuit d'exploitation (3, 4, 11, 12) raccordé à ces indicateurs de positions et réagissant à des différences de positions des bras porteurs (22).

2. Véhicule de transport selon la revendication 1, caractérisé en ce que chaque bras porteur (22) est mécaniquement relié au contact mobile (28) d'un potentiomètre (29, 30) jouant le rôle d'indicateur de positions.

3. Véhicule de transport selon la revendication 1, caractérisé en ce qu'au moyen du circuit d'exploitation le blocage de la commande hydraulique de levage et/ou le déclenchement d'un signal d'alarme peuvent être commandés.

4. Véhicule de transport selon la revendication 2, caractérisé en ce que le couplage mécanique de chaque bras porteur (22) avec le potentiomètre correspondant (29, 30) est constitué par un câble de traction (26) qui est maintenu tendu par un dispositif de tension (25).

5. Véhicule de transport selon la revendication 4, caractérisé en ce que le dispositif de tension est réalisé sous la forme d'un vérin à fluide sous pression (25) sollicité avec une pression prédéfinie.

6. Véhicule de transport selon la revendication 1, caractérisé en ce que le circuit d'exploitation comporte en outre, des parties de circuit (5, 6) réagissant à la position des bras porteurs (22) et grâce auxquelles des dispositifs supplémentaires tels que le verrouillage de la charge, et/ou la commande de basculement peuvent être libérés ou bien commandés lorsque certaines positions des bras sont atteintes.

Fig.1

Fig.2